# EUROPEAN PATENT APPLICATION

(11) **EP 4 574 926 A1**
(43) Date of publication of application: **25.06.2025**
(21) Application number: 24221120.9
(22) Date of filing: 18.12.2024
(51) Int. Cl.: C10B 53/00, C10J 3/00, C10K 1/00, C10K 1/08, C10K 3/00

(54) **INTEGRATED SYSTEM OF DEVICES AND PROCEDURE FOR CONVERTING CARBON-BASED COMPOSITE MATERIAL INTO A HYDROGEN-RICH GAS, WITH THE OPTION OF CAPTURING AND USING ITS EMISSIONS AND WASTE**

(30) Priority: 21.12.2023 ES 202331065
(71) Applicant: Blueplasma Power, S.L., 12006 Castellón (ES)
(72) Inventor: ARAYA BRENES, Mario, 12006 Castellon (ES)
(74) Representative: Soler Lerma, Santiago

(57) **Abstract**

The present invention relates both to an integrated system of devices, which we will refer to as the system, SID or SID system, and to the procedure for efficiently producing a final gas, with hydrogen as the main volumetric component, from a raw gas from a carbon-based material. This is achieved using a hydro-photo catalytic reaction at a lower pressure and temperature than conventional gas reforming systems.

## Description

The invention relates to an integrated system of devices designed to convert carbon-based composite material into a hydrogen-rich gas. The system offers the option of capturing and using its carbon dioxide (CO2) emissions as well as solid and liquid residues. It incorporates the recirculation of heat generated by the combustion of a portion of the final gas produced. This heat is transferred to the raw material within a first circulating metallic and catalytic fluidised bed reactor, where it initially produces a raw gas. After separation from coarse ash, this raw gas passes to a second reactor, where it undergoes a cleaning process that includes partial oxidation with water vapour and/or oxygen. This step eliminates the vast majority of tars, and the gas is then separated from the fine ash during this process.

Optionally, an optional route is added for the capture and use of its CO2 emissions and its solid, liquid and gaseous waste.

### BACKGROUND TO THE INVENTION

Conventional hydrogen production processes from carbon-based material use either steam forming or gasification of solids or liquids for further purification.

These processes commonly use air or oxygen as an oxidizing agent to raise the process temperature to more than 900°C and thus be able to generate raw material thermolysis. Although this is technically feasible, such temperature levels require materials that resist and a high energy consumption. In addition, the gas obtained does not usually have hydrogen as the majority component. To reduce costs, heat recovery equipment has been developed that transfers part of the heat of the combusted synthesis gas to the incoming material or to the oxidizing agent, having to face the following problems.

Dual chamber thermolysis devices use indirect heating systems where a gas transfers heat to the carbon-based solid material. However, this technique is not very efficient, as heat is transferred by convection and the thermal conductivity of the solid is low.

On the other hand, in devices with a single chamber where air, oxygen-enriched air, or heated oxygen is injected to provide heat directly to the carbon-based material through convection, these gases mix with the final gas produced, resulting in a lower percentage of hydrogen.

In addition, conventional systems for producing gas with high hydrogen content also generate gases, liquids (tars and wastewater) and solids (ash) that are not environmentally friendly. In most cases these gases also contain a high level of carbon dioxide, nitrogen oxides and sulphur. The CO2 is generally released into the environment, the tars and the water from the post-washing of gases usually generate environmental problems or high purification costs. The ash that is generated as solid waste usually ends up in landfills.

There are various methods for capturing, storing and using CO2, but they come with the complication of using high pressure, as well as the cost of transporting it to the site of use. One possible use is in soft drinks, but this is only economically viable if the user is close to where the CO2 is captured.

Other issues with conventional systems include the efficient removal of tars from the pyrolysis gas and the efficient provision of heat to the carbon-based material.

Additionally, regarding ash, the costs associated with its capture, storage, transport and landfill fees are very high. Its use in industries such as cement also incurs storage and transport costs, and its purchase price is typically low.

Therefore, the aim of this invention is to produce hydrogen from carbon-based material in a process that operates at atmospheric pressure and at a moderate temperature of around 600°C, where heat is efficiently transferred by conduction to the carbon-based material through conduction, all within a process free from CO2, tars and ash emissions.

### DESCRIPTION OF THE INVENTION

The present invention relates both to an integrated system of devices, which we will refer to as the system, SID or SID system, and to the procedure for efficiently producing a final gas, with hydrogen as the main volumetric component, from a raw gas from a carbon-based material. This is achieved using a hydro-photo catalytic reaction at a lower pressure and temperature than conventional gas reforming systems. It also includes an option to be able to obtain the final gas, free from CO2 emissions and solid or liquid waste.

Said SID system comprises the following equipment:
A) at least two different reactor types, R1 and R2. The R1 with an internal container, the R2 with internal chambers and both with peripheral accessories. Each of these reactors may in turn be composed by a group of reactors. If R1 and/or R2 are composed of more than one reactor, these reactors may be arranged in series, in parallel, or in a combination of both.
B) a suitable gas washing circuit comprising at least two tanks: one designed to trap acidic compounds and another to trap alkaline compounds.
C) at least two cooling and condensation devices, one for the final gas, after gas washing, and another to separate the water and CO2 from the combustion gases from R1.
D) a filtering device for the final gas with one or more filters, preferably two, one being solid and the other of the liquid.
E) at least one blower that suctions and maintains stable pressure within the system.
F) at least two ash collection tanks, where at least one is for coarse ash and at least one for fine ash.
G) at least one carbonation and/or bicarbonation tank, referred to as mineralisation tanks, to dissolve and react CO2 with at least-two substances selected from a specified list.
H) at least one centrifuge and/or draining press, followed by at least one container with a heat source for drying and/or calcining and/or purifying the product from at least one mineralization tank.
I) optionally, a device for producing a foaming additive wherein this device comprises at least one container for mixing and at least one drying unit, both intended for the optional production of a foaming additive, and
J) an automatic control system.

The raw materials with which the system is fed, comprise:
a) The carbon-based material,
b) One or more reactant fluids such as, for example, water, water vapour, oxygen, air and/or carbon dioxide,
c) In addition, the raw material may comprise:
   i) gases and residues external or coming from other stages of the process of the present invention.
   (ii) for the case of producing the additional foaming agent: sodium bicarbonate, potassium bicarbonate, calcium sulphate, potassium sulphate,
   or ammonium sulphate, in addition to the ash.

In relation to reactors R1 and R2:
R1 preferably has a cylindrical shape, and comprises:
i) Two walls, internal and external, separated from each other and defining a chamber, the internal being the wall of an internal container. This internal container has at least one inlet from the outside with at least one feed hopper, and at least two outlets, with at least one of them located at the top suitable for discharging the raw gas and at least another at the bottom suitable for the discharge of ash. The internal container has additional inlets, preferably at one of its ends, with one for at least one reactant fluid and another for the tar that has not been gasified. There may optionally be other inlets for additional gases or hot fluids coming from at least the heat source of the chamber contained within the double wall. Furthermore, this container houses a catalytic fluidised bed primarily comprising granulated metal oxides, preferably based on iron, nickel and copper, along with at least one agitation system, and optionally at least one heat source that generates a fluid, which enters from the top and flows directly into the interior.
ii) A chamber comprised within the double wall, with at least one inlet where a heat source is located that generates a hot fluid that is preferably that generated by the combustion of the final gas or one that has taken heat from it; it also has at least one outlet for the hot fluid generated by the heat source and at least one outlet that connects the chamber with the interior of the internal container.

The R2 with at least one inlet and one outlet comprises:
a) A cyclone where catalysts preferably based on nickel, copper and iron are housed in its walls and inside.
b) At least one heat source that generates a hot fluid with light at a wavelength between 100 and 700 nm (nanometres) preferably ultraviolet (BL/UV) preferably produced by a gas and/or water vapour (G/WV) torch generated by an oxygen and hydrogen (OH) burner or by an electric plasma either induction or non-transferred electric arc.
c) At least one heating zone, located before or within the cyclone mentioned in the previous point, with a heat source that generates hot fluid. The preferred heat source comes from a G/WV torch, preferably produced by an electric plasma or an oxygen and hydrogen burner, while the second preferred comes from an oxy-combustion burner preferably using part of the final gas.
d) At least two ash outlets, each with a pair of valves arranged vertically and in sequence with an intermediate tank for each outlet, for the discharge of fine ash. One pair of these valves is located at the bottom of the container housing the cyclone, and the other pair is at the bottom of the cyclone. Each pair of these valves has the upper valve in a "normally open" position and the lower valve in the "normally closed" position.

Both R1 and R2 may be composed of one or more reactors and if there are more than two reactors these may be arranged and interconnected in series or in parallel, or in combination of both arrangements.

In relation to the gas washing circuit of point B above, it comprises:
a) At least two gas washing sub-circuits with demineralized and doped water, in one of them with an alkaline substance such as sodium or potassium hydroxide, and in another with water doped with an acidic substance such as sulphuric, hydrochloric acid or others.
b) Each of these sub-circuits has at least two inlets, one for the contaminated final gas and one for the doped water inlet, and at least two outlets, one at the top for the already washed final gas and another at the bottom for the doped water together with reaction products such as sodium or potassium chloride in the case that the water is doped with sodium or potassium hydroxide, or as ammonium sulphate in the case that the water is doped with sulphuric acid or the like.
c) Each of these sub-circuits comprises at least one spray to bathe the gases with the doped water.
d) Each of these sub-circuits comprises, at each of its outlets for discharging contaminated doped water, two valves arranged vertically and in sequence with an intermediate space, with the upper valve in a "normally open" position and the lower valve in a "normally closed" position.

In relation to the cooling and condensation devices of point C above:
1. The water vapour condensation device containing the final gas, and which has at least one condenser, comprises:
   a) A liquid-gas heat exchanger where the liquid takes heat from the gas to condense the water from the water vapour that brings the final gas with an inlet for the wet final gas and an outlet for the dry final gas and another outlet for the water that condenses along with traces of polluting substances.
   b) A tank at the outlet of the condenser, which acts as a separator for the final gas and the water that condenses together with some of the impurities carried out by the final gas. In this tank, the water and impurities settle at the bottom, while the final gas exits through an outlet at the top. Additionally, this tank, adequate to discharge water with contaminants, comprises two valves arranged vertically and in sequence, with the upper valve in a "normally open" position and the lower valve in a "normally closed" position.
2. The water vapour condensation device that contains the combustion gas from R1 comprises at least two types of heat exchangers, where each one includes at least one heat exchanger from the following:
   **a)** A type of gas-to-gas heat exchanger, where the reactant fluid and CO2 absorb heat from the combustion gas exiting the R1. Both the gases that take heat and the one that gives heat comprise a chamber with at least one inlet and one outlet each, to maintain an independent circulation.
   **b)** Another type of heat exchanger that acts as a condenser. This is a liquid-to-gas heat exchanger, where the liquid absorbs the heat from the combustion gas to condense the water vapour it carries. This is followed by a tank to separate the CO2 from the condensed water; in this tank, the water accumulates and is subsequently discharged in its condensed form. It comprises two valves arranged vertically and in sequence, with the upper valve in a "normally open" position and the lower valve in a "normally closed" position.

The final gas filtering device indicated in point D comprises an inlet and an outlet and houses at least one solid and/or liquid filter, where the preferred for solid is that of active carbon or calcium carbonate and for the liquid the preferred is of biodiesel or a glycol such as propylene glycol or ethylene glycol; all the filtering elements, after their useful life, can be reprocessed together with the carbon-based material.

The at least one blower indicated in point E comprises an inlet and an outlet of final gas and serves a double function: on the one hand to produce suction and, on the other, to compensate for pressure drops in the SID system to maintain a stable pressure.

The ash collection tanks of point F comprise at least two gas washing tanks for the final gas that collect water with ash and tar impurities, each with at least two inlets and three outlets: the two inlets allow access to water contaminated with ultra-fine ash and tar. In relation to the three outlets: one is to send the tar that floats on the water to R1, another is to send the precipitated wet ultra-fine ash to the R1 feed mouth, and the third to recycle the water by sending it back to the gas washing. These tanks have valves and pumps that respond to level sensors to discharge ash, water and tar.

The mineralization tanks of point G comprise at least one carbonation and/or bicarbonation tank, referred to as mineralisation tank, suitable for dissolving and reacting CO2 with at least two of the following substances: i) sodium or potassium hydroxide, ii) sodium or potassium sulphate, iii) sodium or potassium carbonate, iv) calcium hydroxide, v) sodium chloride, vi) methanol, vii) urea viii) water and ix) ammonia. Additionally, the tank includes at least one heat and cooling source, at least one control and a temperature, pressure and pH sensor, at least one agitation system, and optionally at least one of the following catalysts: zinc oxide and cerium dioxide.

The centrifuge or draining press described in point H is followed by a container tank with an appropriate heat source for drying and/or calcining the product from at least one mineralisation tank.

The optional device for the manufacture of a foaming additive referred to in point I comprises at least one container for mixing and at least one drying equipment, both suitable for the manufacture of an optional foaming additive to be preferably used in construction materials and in the plastic industry.

The automatic control system described in point J comprises a plurality of sensors programmed and suitable for, based on that programming, activating or deactivating the electromechanical equipment and maintaining them within the preset ranges of temperature, pressure, pH, H2/CO ratio, level and flow rate.

The SID system to convert the carbon-based material into a final gas with the option of capturing and using its CO2 emissions and solid waste, executes the following procedure which in turn comprises the following stages:
1.- A first stage of raw gas production: In this first stage, R1 starts the process with the physical-chemical decomposition of the carbon-based material to produce raw gas. This physical-chemical decomposition of the carbon-based material occurs in the R1, and is due to the following reasons:
   a) Be subjected to at least one reactant fluid, at a temperature between 400°C and 800°C.
   b) The carbon-based material is immersed and under agitation, in granulated metal oxides, which behave as a fluidised bed that generates a catalytic effect.
   These conditions contribute to dispersing and transmitting heat and to favouring the formation of the raw gas. In relation to the reactant fluids, the following are preferred: water, water vapour, oxygen, air and carbon dioxide. When one or more reactant fluids are used, they have previously taken heat from the combusted gases from the final gas, either directly by mixing with them, or indirectly by means of a heat exchanger located inside the double jacket.
2.- A second stage of reforming the raw gas: In this stage, in R2 the process carried out in the first stage is continued, with a reforming of the raw gas to remove most of the tars present in said gas. For this reforming to occur, it is economically advantageous to use the heat carried by the raw gas from R1 and, in R2, to apply intense radiation of light with a wavelength between 100 and 700 nanometres (nm) onto a surface covered with catalysts. Preferably, the light is the BL/UV produced by a gas and/or G/WV torch that can be generated by an OH burner or by a PE, whether of induction or non-transferred electric arc. In R2, the tar present in the raw gas undergoes reforming through a hydro-catalytic reaction at a pressure between -100 to 100 millibars and temperature between 400°C and 800°C, transforming the long molecules into shorter ones until they are converted into the final gas, where more than 70% of the molecules are hydrogen and carbon monoxide, thus achieving a molar ratio of these two components close to 2:1, respectively.
3.- A third gas washing stage It occurs in the equipment referenced in point B of the SID system. For gas washing, a cyclone is used within R2, designed to separate fine ash (between 0.5 and 0.1 millimetres in diameter) from the final gas. Following this separation, the gas passes through at least two tanks containing water: one containing an alkaline additive and another an acid additive, in order to capture any residual ultra-fine ash (less than 0.1 millimetre in diameter), traces of tars, and both acidic gases (such as hydrogen chloride and hydrogen sulphide) and basic gases (such as ammonia). Then this final gas, in the cooling and condensing equipment mentioned in point C, goes through a cooling process for the condensation of water with possible traces of tar. Finally, the final gas is filtered by the equipment of point D (gas filtering devices), before it can be used.
4.- A fourth stage of recirculation or reuse of heat: The heat generated by the combustion of a portion of the final gas is used by R1 and R2. This heat acts through the granulated metal oxides on the raw material and the raw gas to raise and maintain their temperature at 600°C, by means of the following routes that may be concurrent:
   - Through the circulation of the final combusted gas and/or at least one reactant fluid that has absorbed heat from it in the chamber formed by the double jacket of the R1, the external surface of at least one internal container of the R1 is heated, which in turn transfers heat to the granulated metal oxides. These oxides, through conduction, transmit the heat received to the carbon-based material flowing through the internal container of the R1. To efficiently transfer the heat by conduction to the carbon-based material, it is important that the granulated metal oxides are under agitation, either by means of injecting under pressure at least one of the hot reactant fluids or with an agitation system such as a mechanical agitator, the above, at temperatures between 400°C and 800°C.
   - Through the circulation of the final combusted gas and/or at least one reactant fluid that has absorbed heat from it in the chamber formed by the double jacket of the R1, the granulated metal oxides and the carbon-based material flowing inside are directly heated (within at least one internal container of the R1). To efficiently transfer the heat by conduction to the carbon-based material, the granulated metal oxides must be under agitation, either by means of injecting under pressure at least one of the hot reactant fluids or with an agitation system such as a mechanical agitator at temperatures from 400°C to 800°C.
   - By applying electrical heating to the external walls of at least one internal container of R1, through which the granulated metal oxides and raw materials pass, and/or to the external walls of at least one duct through which at least one of the reactant fluids flows.
5.- A fifth stage of waste capture and reuse: This stage, wherein the equipment referenced in points F, G and H are involved (ash collection tanks, mineralization tanks and a centrifuge or squeeze press), optionally comprises a route to capture and use solid, liquid and gaseous waste, so that all solid, liquid and gaseous waste are able to enter the circular economy. The sub-stages comprised in this fifth stage are detailed below, describing where the aforementioned waste is located and collected, also indicating the destination of each one:
   - Sub-stage (a): The CO2 is captured from the final combusted gas at the end of the R1 chimney, using the equipment mentioned in point C, section b (a tank at the condenser outlet designed to separate water from the final gas) and is sent to the equipment referenced in point G (mineralisation tanks). Said final combusted gas is the one used to heat R1 and comprises CO2 and water vapour, these two components are separated by cooling with at least one condenser followed by a separator tank. The separated CO2 is captured by dissolving and reacting it with at least two of the following substances: i) sodium or potassium hydroxide, ii) sodium or potassium sulphate, iii) sodium or potassium carbonate, iv) calcium hydroxide, v) sodium chloride, vi) methanol, vii) urea, viii) water and ix) ammonia. This process produces sodium or potassium carbonate or bicarbonate or dimethyl carbonate. Subsequently in the equipment referenced in point H (a centrifuge or draining press followed by a tank with a heat source): a) in the case of sodium or potassium bicarbonate, once the solid has precipitated, it is centrifuged, dried and/or purified for commercialisation; b) in the case of sodium or potassium carbonate, the previous product requires calcination. In the case of the bicarbonates produced, they can be sold on the already established market or they can be used in the manufacture of the foaming additive comprised in this patent. Ammonia, calcium or ammonium sulphate or calcium or ammonium chloride by-products can also be sold when sodium or potassium bicarbonate carbonate is produced.
   - Sub-stage (b): Dried coarse ash (greater than 0.5 millimetres in diameter) is captured in the lower part of R1. This coarse or sand-like ash is composed of more than 50% various inert metals generated in at least one R1, and is destined for the mixing tank where the foaming additive can be produced, as referenced in the equipment from point I.
   - Sub-stage (c): The fine, dry ash (with moisture content less than 4%) is captured in the lower part of R2. Said fine ash is generated in at least one cyclone contained in at least one R2 and is destined for the mixing tank where the foaming additive referenced in the equipment of point I is optionally produced.
   - Sub-stage (d): The ultra-fine and wet ash (with moisture content over 50%) is captured at the bottom of at least one gas washing tank. This ash is primarily composed of traces of fixed carbon, and can be mechanically extracted for use as a carbon-based material in R1.
   - Sub-stage (s): The water from the gas washing accumulates by precipitation at the bottom of at least one tank that it has, which is located at its lower section. This water, already 95% free of captured tar and 95% free of captured ash, is used again in gas washing. The traces of tar that remain floating can also be separated and mechanically extracted to be reintroduced into R1 along with the carbon-based material.
6.- A sixth stage of reuse of fine and coarse ash: The equipment referenced in point I (mixing container and drying equipment) optionally uses its own dry coarse and fine ash mixed with at least one of the following products: a) sodium or potassium bicarbonate b) ammonium or calcium sulphate, along with a dispersant such as polyethylene wax, ethylene-vinyl acetate (EVA), or paraffin, to create a multifunctional additive: foaming agent, thermal and sound insulation agent, and fire retardant. This sixth stage comprises the following sub-stages to produce and use this additive easily within plastic, clays, mortars or cements:
   Sub-stage 1 of stage 6: In the mixing tank, the dispersant wax is heated to a temperature sufficient for it to melt and be completely liquid.
   - Sodium or potassium bicarbonate or ammonium or calcium sulphate is added to the liquid wax and kept under agitation until its components are distributed,
   - It is cooled until a viscous consistency is achieved,
   - Once this viscous consistency is reached, the agitation is stopped and it is allowed to cool until solidification occurs. Finally, in its solid state, it is chopped for potential use, for example, in the manufacture of pellets or granules..
   - For the aforementioned mixture, the amount of sodium or potassium bicarbonate, or ammonium or calcium sulphate, must be equal to or greater than the coarse and fine ash produced in the SID.
   - Sodium bicarbonate or potassium bicarbonate, or alternatively ammonium or calcium sulphate, derived from other processes unrelated to the present invention, may be added to the mixture described in the previous point.

The importance of the previous stages is that they convert the hydrogen production system into a clean process without a positive carbon footprint. Furthermore, the use of CO2 emissions and the ashes from this process strengthen the circular economy. The ashes, which have so far been considered of little or no value because they are generally used as a replacement for sand in the manufacture of cement or mortar products, gain added value when sold as part of the foaming additive. CO2, which has also been regarded as a low-value product, has been used to produce carbonated beverages in locations near where the CO2 is generated. With this invention it now presents the opportunity to enter a more attractive market through the manufacture of sodium or potassium carbonates or bicarbonates. These are sold in significant quantities in agriculture to neutralise soil acidity, as well as foaming agents for food products, plastics, concrete, cement, ceramics and clay. Additionally, sodium or potassium carbonates are used in the industry for the manufacture of paper, textiles, soap and glass.

Sodium or potassium bicarbonate incorporated into the foaming additive are environmentally advantageous when used in the plastics industry. This is because, during the manufacturing process of finished products, when the foaming additive is heated within the plastic resin, the CO2 is released through decomposition and becomes encapsulated, preventing it from migrating into the environment because it remains trapped in closed cells within the material, that is, in small microbubbles that significantly reduce the product density. That is, the foaming additive replaces raw materials from fossil material and prevents CO2 emissions to the environment.

7.- A seventh stage of process control: The control equipment referenced in point J and comprising sensors placed in different places of the different devices, and which are suitable for measuring the temperature, pressure, pH, H2/CO ratio, level and flow, and for automatically controlling the correct operation of the system. According to the indication of these sensors, the system itself takes the necessary actions automatically to maintain control of pre-set parameters preferably by ratios of expected operation ranges according to pre-set limits, in such a way that if any ratio were to go beyond the pre-set, the sensor corrects and would give the order to act on the respective components as indicated below:
**a)** A range is defined for the following ratio: actual volume of hydrogen/actual volume of carbon monoxide: H2/CO
   - If it is greater than the defined value, the vapour feed decreases until it reaches a ratio within the defined range.
   - If it is smaller, the vapour feed increases until it reaches it.
**b)** A range is defined for the following ratio: actual reactor1 temperature /preset limit temperature: (T1) / (T limit).
   - If the temperature is higher than defined, the feed of raw material increases until a temperature within the defined ranges is reached.
   - If the temperature is lower, the oxygen feed is activated in R1 until a temperature within the defined ranges is reached.
**c)** A range is defined for the following ratio: actual reactor 1 pressure/preset limit pressure 1: (PR1) / (PR limit 1)
   - If the pressure is higher than the defined ranges, the feed of raw material and/or oxygen is reduced until the pressure is within the defined ranges. This order governs (b).
   - If the pressure is lower than the defined ranges, the feed of raw material and/or oxygen is increased until the pressure is within the defined ranges.
      A safety valve opens if the ratio is higher than 1.
**d)** A range is defined for the following ratio: actual reactor 2 pressure/preset limit pressure 2: (PR2) / (PR limit 2)
   - If the pressure exceeds the defined ranges, the suction of the blower referenced in the equipment of point E increases until the pressure reaches the levels of the defined ranges.
   - If the pressure is below the defined ranges, the suction of the blower decreases, and can reach zero, until the pressure is restored within the defined ranges.
**e)** A range is defined for the following ratio: level in any of the tanks for separately discharging each of the following materials: dry ash, tar, water and wet ash/limit level: (N) / (N limit).
   - If it is greater than expected, the valve and pumps are activated.
   - If it is less than expected, the valve and pumps are deactivated.

Stages 5 and 6 are optional, in the sense that they provide an added advantage to the proposed system, but in themselves do not alter the way the final gas is produced; rather, they complement the system by removing waste, although other methods of waste reduction or elimination could also be implemented.

### BRIEF DESCRIPTION OF THE FIGURE

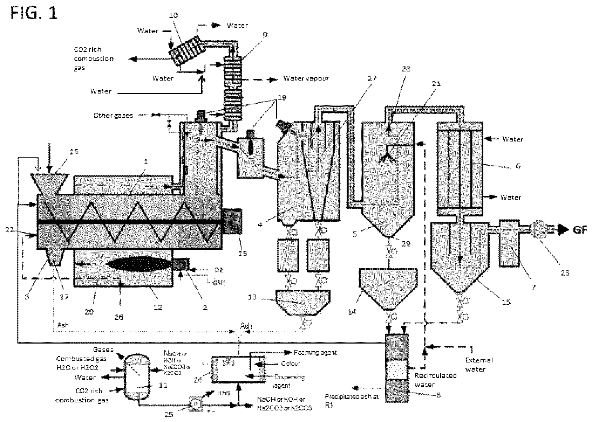

FIGURE 1 illustrates, as an example that does not exclude other possibilities, the SID system and its (mode of operation) that is the subject of the present. This figure shows, in the internal container of R1 (1), the entry of carbon-based material (22) through a feed inlet (16), where calcium, sodium or potassium carbonate is also introduced as an optional additive. This additive is an alkaline element that serves to capture acidic substances, as it reacts with them to form compounds such as calcium chloride or sulphate, which are then expelled from the system as part of the ash. This R1 (1) is composed of an external and an internal chamber that consists of a container that houses granulated metal oxides with an electric agitator (18) to which at least one reactant fluid that has been previously heated in a heat exchanger (9) is added. The carbon-based material, when gasified, generates solid waste that consists of ash in the form of sand, which is removed by gravity through a shaft (3) and a duct (17) located at the bottom of the R1 (1).

Between the walls of the internal container of R1 (1) and a jacket that surrounds it, a space is formed that acts as a combustion chamber (12), preferably of oxy-combustion. Inside this chamber there is at least one burner (2) to combust hydrocarbons or the final gas (FG) in order to heat both the walls of the internal container of R1 and also to superheat at least one reactant fluid (26) in a coil or heat exchanger (20) located within the combustion chamber (12). Then this already hot reactant fluid is injected into the internal part where the carbon-based material (22) runs.

The final gas burner (2) with oxygen can be replaced by a G/WV torch generated by an electric plasma or a torch resulting from the combustion of oxygen and hydrogen from water electrolysis.

The combustion gases, upon leaving R1, when derived from oxy-combustion, pass through at least one heat exchanger (9) to transfer their heat to at least one of the reactant fluids, before it is superheated in the heat exchanger located in R1 within the combustion gas chamber.

When the combustion gases come from oxy-combustion, after transferring their heat to the reactant fluid in the heat exchanger (9), they then pass through a closed-loop cooler (10) to generate condensation of the water vapour, thereby separating the CO2 gas. This gas can optionally be used for the production of sodium or potassium carbonate or bicarbonate in the container (11) or tank, where it is dissolved in aqueous sodium or potassium hydroxide or in sodium or potassium carbonate. Optionally, hydrogen peroxide can be incorporated to obtain oxygen as a by-product of the production of sodium or potassium carbonate or bicarbonate. According to its molar relationship with CO2, the optional hydrogen peroxide, and sodium or potassium hydroxide, sodium or potassium carbonate or bicarbonate is produced. These products are then dried in a container or equipment designed for this purpose to obtain the corresponding powder or flakes.

The raw gas from the carbon-based material generated in R1 is led to R2 (4) which houses a metal cyclone (27) with attached or embedded catalysts, which separates the fine ash carried by the final gas flowing through R2 by gravity (4). The raw gas is converted into the final gas by undergoing a hydro-photo-catalytic reaction when exposed to a BL/UV light at 600°C and atmospheric pressure, thus transforming almost all of its tars into carbon monoxide and hydrogen. The hydro-photo-catalytic reaction (HFC) occurs with a powerful BL/UV ray light emitted by at least one G/WV torch generated by electric plasma (EP) or the torches (19); at the same time, in this cyclone that houses R2 inside, the ultra-fine ash is separated by gravity.

Then the final gas passes to a container (5) where it receives a water bath doped (21) with an alkaline agent to retain in it any trace of acid gas that has leaked and another water bath doped with an acid agent to trap traces of ammonia and other basic gases.

After washing the final gas (FG), it passes through the outlet (28) and is led to the condenser (6) where it transfers up most of its heat and when cooled it is freed from excess moisture. The condensation water from the condenser (6) accumulates in the container (15) to be subsequently used. After passing through the condenser (6) and the container (15), the final gas (FG) is directed to a commercial gas filter (7) and optionally passes to a gas analyser or on-line chromatograph, which determines and records the composition of the final gas to serve as a data source for monitoring gas quality. This, along with sensors, allows for the automatic control of the entire process; this represents the final stage of the process of obtaining the final gas. The blower (23) is responsible for carrying out a vacuum in the system to drive the final gas (FG) through the aforementioned systems.

The CO2 obtained from the condensed combustion gases is bubbled into the container (11) with aqueous sodium or potassium hydroxide or carbonate to react with it and produce sodium or potassium bicarbonate. After centrifuging and drying (25), the product is obtained in powder or flake form.

Part of the sodium or potassium bicarbonate may optionally be used for mixing with the dispersing agent and the ash. The three products are mixed in equal parts in the mixing tank (24) and there heat is applied to them, at a temperature that is slightly higher than the melting point of the dispersing agent so that in the liquid state and under agitation it reaches a viscous consistency and so that on cooling it forms a homogeneous paste.

Dry solid waste is ash that comes from 2 sources. The first source is coarse ash that is produced by R1 and expelled through the outlet (17), the second source is fine ash that comes from the cyclone that houses R2 and is expelled through its outlet (13).

A third source is wet and ultra-fine ash from the water collection tank (8). The ash from the first two sources, being dry and due to its composition, can be used to mix with the dispersing agent and sodium or potassium bicarbonate, or ammonium or calcium sulphate to produce the foaming agent.

The water resulting from the gas washing passes through the outlet (29) and after being deposited in the tank (14), it passes to another tank (8), where if there were any remaining tar, it would float in the water due to the difference in density and is recycled by being pumped to the hopper (16) of R1 (1). Wet and ultra-fine ash that mostly consists of carbon particles precipitates at the bottom of this washing tank (8) and is recycled by being pumped to the hopper (16) of R1 (1). The coarse and fine ash that is collected from R1 (1) and R2 (2) is mechanically extracted from the points where it is collected and transferred to be mixed in the container (24) after its accumulation in the tanks (13) and (17). The rest left in the tank (8) is only water which is recirculated to be used again in the gas washing in the container (5).

### DESCRIPTION OF AN EMBODIMENT

Here, one possible method of implementing the SID to convert carbon-based material first into combustion gas and then into final gas is described, along with an option for capturing and using its by-products.

First, the carbon-based material is introduced into the internal container of R1. This R1 has a double jacket, between which part of the final gas is combusted to heat the internal container to 600°C. It is in this double jacket chamber wherein a heat exchanger is also located to superheat water vapour which is injected into the internal container of this R1, where granulated metal oxides are also present, under agitation at 600°C. In this example, the carbon-based material together with the water vapour as the reactant fluid are those constituting the raw material. The raw material is introduced into R1 and comes into contact with the hot granulated metal oxides and under agitation produces combustion gas. This process generates solid waste in the form of ash that is then expelled from the system through the ash outlet of R1.

In this example, metal oxides based on iron, nickel and copper, heated to 600°C, are used as a fluidised bed. The combustion gas formed in the internal container of R1 at a temperature of 600°C is then directed to R2, where the gas reforming takes place using a G/WV torch generated by a non-transferred electric arc plasma, which emits a powerful UV light. This torch, surrounded by catalysts, triggers the hydro-photo-catalytic reaction that dissociates the long, heavy molecules of tar present in the combustion gas to produce hydrogen and carbon monoxide in an approximate ratio of 2:1, respectively. This is verified by the on-line gas analyser. This reaction is carried out at atmospheric pressure and at a mean temperature of 600°C.

This combustion gas, after undergoing the hydro-photo-catalytic reaction, is converted into the final gas obtained. That is, the carbon from the tars present in the combustion gas captures oxygen and releases hydrogen from the water vapour reactant, thereby increasing the hydrogen content in the total volume of the final gas. The molar ratio of hydrogen to carbon monoxide (H2/CO) obtained with the SID through the procedure outlined in this patent is 2, thereby doubling the molar ratio of conventional systems that use pure oxygen, air or carbon dioxide as reactants.

Finally, the CO2 from the combustion gases that heat R1 is captured. Once the water is condensed, the CO2 is bubbled into aqueous sodium carbonate to react with it and form sodium bicarbonate, which precipitates in the same tank. After extracting the sodium bicarbonate, it is centrifuged and dried for use or commercialization.

In this example, part of the sodium bicarbonate is used to mix it with a dispersing agent, which in this case is paraffin. Both products are mixed in equal parts in the mixing tank and heated to a temperature of 70°C, which is slightly above the melting point of the dispersing agent (paraffin). This allows the mixture to increase its viscosity progressively in a homogeneous liquid state and, finally, to solidify when cooled to below 30°C. In this way, the solid is cut into cubic pieces of approximately 1x1x1 centimetres to facilitate its future incorporation into plastic resin, mortars, or clay mixture for ceramics, similar to the process used with other granulated foaming additives.

## Claims

1. INTEGRATED SYSTEM OF DEVICES FOR CONVERTING A RAW MATERIAL COMPRISING A CARBON-BASED MATERIAL INTO A HYDROGEN-RICH GAS **characterised in that** the raw material comprises a carbon-based material and one or more reactant fluids and **in that** the integrated system of devices comprises in this order:
- Two different types of reactors, R1 (1) and R2 (4) interconnected to each other in series, in parallel or in a combination of both, wherein R1 comprises two walls separated from each other that define an internal container and an outer chamber.
- A circuit comprising two tanks suitable for washing the gas coming from R2.
- Two cooling and condensation devices, one for the final gas, after gas washing, and another adequate to separate the water and CO2 from the combustion gases from R1.
- A suitable filtering device for filtering the final gas.
The integrated system further comprises:
- A suitable blower to maintain the pressure in the assembly.
- A device for collecting the coarse and fine ashes coming from the process.
- A mineralization tank suitable for dissolving and reacting CO2.
- A centrifuge and/or draining press and a container with a heat source to treat the product coming from the tank or one of the mineralization tanks.
- A control system.
Optionally the integrated system further comprises a device suitable for the manufacture of a foaming additive.

2. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** R1 has a cylindrical shape.

3. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the internal container of R1 comprises a feeding inlet and at least two outlets, one of them arranged in its upper part where the raw gas is discharged and another in the lower part suitable for discharging the ashes plus an inlet suitable for introducing one or more reactant fluids into the container and another suitable for introducing tar that did not become gasified throughout the process.

4. INTEGRATED SYSTEM OF DEVICES FOR CONVERTING A RAW MATERIAL COMPRISING A CARBON-BASED MATERIAL INTO A HYDROGEN-RICH GAS according to claim 3, **characterised in that** the internal container of R1 optionally comprises other inlets for other hot gases or fluids from at least one heat source of the chamber comprised within the double wall of R1.

5. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the internal container of R1 houses a catalytic fluidised bed predominantly comprising granulated metal oxides.

6. INTEGRATED SYSTEM OF DEVICES FOR CONVERTING A RAW MATERIAL COMPRISING A CARBON-BASED MATERIAL INTO A HYDROGEN-RICH GAS according to claim 5, **characterised in that** the granulated metal oxides comprise at least one of these metals; iron, nickel or copper.

7. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the internal container of R1 comprises an agitation system and optionally at least one heat source.

8. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the outer chamber of R1 comprises an inlet for a gas, a heat source suitable for generating a hot fluid with that gas, an outlet for the heated fluid generated by the heat source, and an outlet that connects the outer chamber with the internal container.

9. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** R2 comprises an inlet and an outlet, a cyclone wherein catalysts are housed within the inlet duct as well as in the walls and interior, a heat source that generates a hot fluid with light at a wavelength between 100 and 700 nm (nanometres), at least one heating zone with at least one heat source that generates a hot fluid, and fine ash outlets wherein each fine ash outlet comprises a pair of valves arranged vertically and in sequence with an intermediate tank at each outlet.

10. INTEGRATED SYSTEM OF DEVICES FOR CONVERTING A RAW MATERIAL COMPRISING A CARBON-BASED MATERIAL INTO A HYDROGEN-RICH GAS according to claim 9, **characterised in that** the catalysed substances housed in R2 are based on nickel, copper and iron.

11. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** both R1 and R2 consist of one or more reactors that can be interconnected either in series or in parallel, or in a combination of both arrangements.

12. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the circuit comprising two tanks suitable for gas washing comprises two gas washing sub-circuits with demineralised and doped water, one containing an alkaline substance and the other an acidic substance. Furthermore, each of the gas washing sub-circuits comprises an inlet for the contaminated final gas, and another inlet for the doped water, an outlet for the washed final gas, and another outlet for the doped water along with reaction products.

13. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the cooling and condensation devices comprise at least one condenser, which in turn comprises a liquid-gas heat exchanger to condense the water from the water vapour of the final gas and at least one condenser for the water vapour containing the combusted gas from R1.
Wherein in the liquid-gas heat exchanger, the liquid absorbs heat from the gas to condense the water from the water vapour of the final gas, and wherein the heat exchanger has an inlet for the wet final gas, an outlet for the dry final gas, and another outlet for the condensed water along with traces of contaminant substances. It further comprises a tank at the outlet of the condenser, which acts as a separator for the final gas and condensed water along with some of the impurities carried by the final gas.
And wherein the condenser for the water vapour containing the combustion gas from R1 comprises at least two types of heat exchangers.

14. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the filtering device comprises an inlet and an outlet and houses at least one filter.

15. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the ash collection device comprises two gas washing tanks for the final gas that collect water with impurities from ash and tar, each having at least two inlets and three outlets, where the two inlets allow access for the water contaminated with ultra-fine ash and tar. Regarding the outlets, one is for sending the tar that floats on the water back to R1, another is for sending the precipitated wet ultra-fine ash to the feed inlet of R1, and the third is for recycling the water by sending it back to the gas washing process.

16. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the mineralisation tanks are suitable for dissolving and reacting CO2 with at least two of the following substances: i) sodium or potassium hydroxide, ii) sodium or potassium sulphate, iii) sodium or potassium carbonate, iv) calcium hydroxide, v) sodium chloride, vi) methanol, vii) urea, viii) water and ix) ammonia. Furthermore, the mineralisation tanks comprise a heat and cooling source, temperature, pressure and pH control, an agitation system and optionally at least one of the following catalysts: zinc oxide or cerium dioxide.

17. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the centrifuge and/or press is followed by a container tank with a suitable heat source for drying and/or calcining the product from a mineralisation tank.

18. INTEGRATED SYSTEM OF DEVICES FOR CONVERTING A RAW MATERIAL COMPRISING A CARBON-BASED MATERIAL INTO A HYDROGEN-RICH GAS according to claim 1, **characterised in that** the control system is suitable for measuring and correcting up to preset ranges the temperature, pressure, pH, H2/CO ratio, level and flow rate.

19. PROCEDURE FOR CONVERTING A RAW MATERIAL COMPRISING A CARBON-BASED MATERIAL INTO A HYDROGEN-RICH GAS **characterised in that** it comprises the following stages:
A first stage of raw gas production: In this first stage, R1 starts the process with the physical-chemical decomposition of the carbon-based material.
A second stage of reforming the raw gas: In this stage, in R2 the process carried out in the first stage is continued, with a reforming of the raw gas to remove most of the tars present in said gas. For this reforming to occur, it is economically advantageous to use the heat carried by the raw gas of R1 and, in R2, apply intense light radiation with a wavelength between 100 and 700 nanometres (nm) onto a surface covered with catalysts.
A third stage of gas washing is employed, for which the cyclone in R2 is suitable for separating fine ash (between 0.5 and 0.1 millimetres in diameter) from the final gas. Following this separation, the gas passes through at least two tanks containing water: one containing an alkaline additive and the other an acid additive, in order to capture any residual ultra-fine ash (less than 0.1 millimetre in diameter), traces of tars, and both acidic gases and basic gases. The final gas then undergoes a cooling process for the condensation of water along with any possible traces of tar. Finally, the final gas is filtered before it can be used.
A fourth stage of recirculation or reuse of heat: The heat generated by the combustion of a portion of the final gas is used by R1 and R2 where this heat acts through the granulated metal oxides on the raw material and the raw gas to raise and maintain their temperature.
A fifth stage of waste capture and reuse.
A sixth stage of reuse of fine and coarse ash: At this stage the dried coarse and fine ash is mixed with at least one of the following products: a) sodium or potassium bicarbonate b) ammonium or calcium sulphate, along with a dispersant such as polyethylene wax, ethylene-vinyl acetate (EVA), or paraffin, resulting in a multifunctional additive.
A seventh stage of process control involves sensors distributed throughout the system measuring the temperature, pressure, pH, H2/CO ratio, level and flow. An electronic system takes the necessary actions to correct the situation if one or more of the measurements falls outside the preset ranges.
Wherein stages 5 and 6 are optional.

20. PROCEDURE FOR CONVERTING A RAW MATERIAL COMPRISING A CARBON-BASED MATERIAL INTO A HYDROGEN-RICH GAS according to claim 19, **characterised in that** the waste capture and reuse stage 5 comprises at least one of the following sub-stages:
Sub-stage (a): The CO2 is captured from the combusted final gas at the end of the R1 chimney, in a tank at the condenser outlet designed to separate water from the final gas, and is sent to the mineralisation tanks. Said combusted final gas is the one used to heat R1 and comprises CO2 and water vapour. These two components are separated by cooling with at least one condenser followed by a separator tank. The separated CO2 is captured by dissolving and reacting it with at least two of the following substances: i) sodium or potassium hydroxide, ii) sodium or potassium sulphate, iii) sodium or potassium carbonate, iv) calcium hydroxide, v) sodium chloride, vi) methanol, vii) urea, viii) water and ix) ammonia. This process produces sodium or potassium carbonate or bicarbonate or dimethyl carbonate. Subsequently, in the centrifuge followed by a heat source tank: a) the case of sodium or potassium bicarbonate, once the solid has precipitated, is centrifuged, dried and/or purified or separated, for commercialisation; b) the case of sodium or potassium carbonate requires the calcination of the previous product.
Sub-stage (b): Dried coarse ash (greater than 0.5 millimetres in diameter) is captured in the lower part of R1. This sand-like coarse ash is composed of more than 50% inert metals generated in at least one R1, and is directed to the mixing tank and optionally the foaming additive is produced.
Sub-stage (c): The fine, dry ash (with moisture content less than 4%) is captured in the lower part of R2. Said fine ash is generated in the cyclones contained in one R2 and is destined to the mixing tank where the foaming additive is optionally produced.
Sub-stage (d) The ultra-fine (with a particle size less than defined as cold ash) and wet ash (moisture content over 50%) is captured at the bottom of at least one gas washing tank. This ash is composed of traces of fixed carbon, that can be mechanically extracted for use as a carbon-based material in R1.
Sub-stage (e): Water from the gas washing accumulates by precipitation at the bottom of at least one gas washing tank. This water, already 95% free of captured tar and 95% free of captured ash, is used again in gas washing. The traces of tar that remain floating can also be separated and mechanically extracted to be reintroduced into R1 along with the carbon-based material.

21. PROCEDURE FOR CONVERTING A RAW MATERIAL COMPRISING A CARBON-BASED MATERIAL INTO A HYDROGEN-RICH GAS according to claim 19, **characterised in that** in the sixth stage of reuse of fine and coarse ash, the fine and coarse ash is mixed with at least one of the following products: a) sodium or potassium bicarbonate b) ammonium or calcium sulphate, along with a dispersant such as polyethylene wax or ethylene-vinyl acetate (EVA), or paraffin to obtain a multifunctional additive and wherein this sixth stage comprises the following sub-stages to produce and use this additive.
a) In the mixing tank, the dispersant wax is heated until it is completely liquid.
b) The sodium or potassium bicarbonate or ammonium or calcium sulphate is added to the liquid wax in an amount equal or greater than the amount of fine and coarse ash used, and the mixture is kept under agitation until its components are well distributed,
c) It is cooled until a viscous consistency is achieved,
d) Once this viscous consistency is reached, agitation is stopped and it is allowed to cool until solidification occurs.
e) Finally, in its solid state, it is chopped for potential use, for example, in the manufacture of pellets or granules.

22. PROCEDURE FOR CONVERTING A RAW MATERIAL COMPRISING A CARBON-BASED MATERIAL INTO A HYDROGEN-RICH GAS according to claim 19, **characterised in that** in the seventh stage the correction actions are the following:
a) A range is defined for the actual volume of hydrogen/actual volume of carbon monoxide H2/ CO
- If the sensor measurement indicates a ratio greater than the defined value, the vapour supply is decreased until the ratio falls within the defined range.
- If the sensor measurement indicates a lower ratio, the vapour supply increases until it reaches it.
b) A range is defined for the actual reactor1 temperature /preset limit temperature: (T1) / (T limit).
- If the sensor measurement indicates a temperature higher than the defined value, the supply of raw material is increased until the temperature reaches the defined range.
- If the sensor measurement indicates a lower temperature, the oxygen supply is activated in R1 until a temperature within the defined ranges is reached.
- This action is conditioned by the pressure ratios in R1
c) A range is defined as the actual pressure of reactor 1/preset limit pressure 1: (PR1) / (PR limit 1)
- If the sensor measurement indicates a pressure higher than the defined ranges, the supply of raw material and/or oxygen is reduced until the pressure is within the defined ranges. This order takes precedence over action (b).
- If the sensor measurement indicates a pressure lower than the defined ranges, the supply of raw material and/or oxygen is increased until the pressure is within the defined ranges.
- A safety valve opens if the ratio is higher than 1.
d) A range is defined for the actual pressure of reactor 2/preset limit pressure 2: (PR2) / (PR limit 2)
- If the sensor measurement indicates a pressure above the defined ranges, the suction of the blower increases until the pressure reaches the levels of the defined ranges.
- If the sensor measurement indicates a pressure below the defined ranges, the suction of the blower decreases, and can reach zero, until the pressure is restored within the defined ranges.
e) A range is defined for the following level in any of the tanks for separately discharging each of the following materials: dry ash, tar, water and wet ash/limit level: (N) / (N limit).
- If the sensor measurement is higher than expected, the valve and pumps are activated.
- If the sensor measurement is lower than expected, the valve and pumps are deactivated.
